Europäisches Patentamt

(19) European Patent Office

Office européen des brevets

(11) **EP 0 699 930 B1**

(12) **EUROPEAN PATENT SPECIFICATION**

(45) Date of publication and mention
of the grant of the patent:
**04.10.2001 Bulletin 2001/40**

(51) Int Cl.[7]: **G02B 6/38**, G02B 6/32

(21) Application number: **95305926.8**

(22) Date of filing: **24.08.1995**

(54) **Fibre optic connector**

Faseroptisches Stecker

Connecteur à fibre optique

(84) Designated Contracting States:
**DE FR GB**

(30) Priority: **26.08.1994 GB 9417247**

(43) Date of publication of application:
**06.03.1996 Bulletin 1996/10**

(73) Proprietor: **BAE SYSTEMS plc**
**Farnborough, Hampshire GU14 6YU (GB)**

(72) Inventors:
 • **Gardner, Andrew**
 **British Aerospace Defence Ltd.**
 **Brough, N. Humberside HU15 1EQ (GB)**
 • **Fountain, James,**
 **Britisch Aerospace Defence Ltd.,**
 **Brough, N. Humberside HU15 1EQ (GB)**

(74) Representative: **Gold, Tibor Z.**
 **Kilburn & Strode**
 **20 Red Lion Street**
 **London WC1R 4PJ (GB)**

(56) References cited:
 **DE-A- 3 831 906**      **JP-A- 5 251 717**
 **US-A- 4 545 643**      **US-A- 5 037 173**
 **US-A- 5 241 612**

 • **OPTICAL AND DIGITAL GAAS TECHNOLOGIES**
 **FOR SIGNAL-PROCESSING APPL., 16-18 APRIL,**
 **ORLANDO, vol. 1291, 16 April 1990, pages**
 **250-259, XP000255808 NELSON G L ET AL:**
 **"MILITARIZED, 0.120 INCH TALL,**
 **CONNECTORIZED OPTOELECTRONIC**
 **DEVICES FOR AVIONIC APPLICATIONS"**

**Description**

This invention concerns adaptors for use with fibre optic connectors of the kind carrying a plurality of optical fibres, such an adaptor serving for transmitting light between and for optically aligning beams of light from optical fibres in different parts of the connector.

Single mode optical fibres for use in communications networks are well known, but their application to other industries has been limited as a result of a difficulty in producing satisfactory connectors for connecting individual optical fibres together.

The connectors which are presently available are expensive due to the need for precise alignment of each of the optical fibres with sub-micron accuracy at the connector interface, and these connectors tend to be intolerant to vibration and the ingress of dirt. This poses problems for the design of a single mode optical fibre communications network for use on an aircraft, although in other respects single mode optical fibre technology would have significant benefits in such an application.

One solution to the problem of tolerance in single mode optical fibre connectors is to expand the beam supplied by one optical fibre using a system of lenses to produce at the connector interface a collimated beam having a diameter much greater than that of the fibre core. Such an arrangement is much less susceptible to misalignment and dirt but can be bulky.

An alternative solution to the problem of cost has recently become available and comprises a connector which allows multiple single mode optical fibres to be connected using a single low cost ferrule. This ferrule features a male plug formed from a material, such as an epoxy resin, which can be manufactured to a specified design with a very high accuracy and which contains a plurality of single mode optical fibres having their respective ends terminating in a row at the connector interface.

The plug also has a pair of holes at each end of this row for receiving alignment pins.

This male part is receivable within a corresponding female part (socket) containing a further plurality of single mode optical fibres having their respective ends terminating in an identical row at the female connector interface. The female part additionally has a pair of holes for receiving alignment pins and, when the two parts are fitted together, alignment pins within the holes of both parts co-operate to secure the parts together and retain the two rows of optical fibre ends in matching alignment with one another. This connector has the advantages of being compact and inexpensive to produce and of being relatively easy to connect but is not particularly rugged and still suffers from intolerance to dirt and vibration.

It is an aim of the present invention to overcome the problems indicated above and to provide an economically viable arrangement, which is robust and reliable and easy to use, for connecting multiple single mode optical fibres together.

The present invention aims to provide an adaptor for attachment to the above-described ferrule incorporating the respective ends of the plurality of single mode optical fibres.

The present invention seeks to provide an adaptor for expanding the beams from the ends of a plurality of single mode optical fibres, the adaptor having a pair of holes therethrough for receiving alignment pins for aligning the adaptor with a ferrule and having a plurality of openings therethrough, each opening being arranged to be aligned with the end of a respective one of the optical fibres and each containing a respective graded index lens for expanding a light beam supplied from the associated optical fibre.

According to the present invention, there is provided a detachable adaptor as defined in claim 1.

Preferably, the passages through the adaptor comprise a plurality of parallel bores which may be arranged in a row or a plurality of such rows.

The adaptor may be formed with a layer of refractive index-matching adhesive covering the ends of the lenses to be aligned with the optical fibres. In this instance, the adhesive is preferably selected to have a refractive index matching that of the optical fibre cores.

According to another aspect of the present invention, there is provided a fibre optic connection comprising a pair of fibre optic connectors, as defined in claim 5.

The invention is described further, merely by way of example, with reference to the accompanying schematic drawings in which:

Figure 1 is a perspective view of an adaptor according to the invention showing how the adaptor may be fitted to an existing MT ferrule;
Figure 2 is an enlarged perspective view of the adaptor; and
Figure 3 is a longitudinal section through a graded index lens forming part of the adaptor and showing the effect of the lens when coupled to a single mode optical fibre.

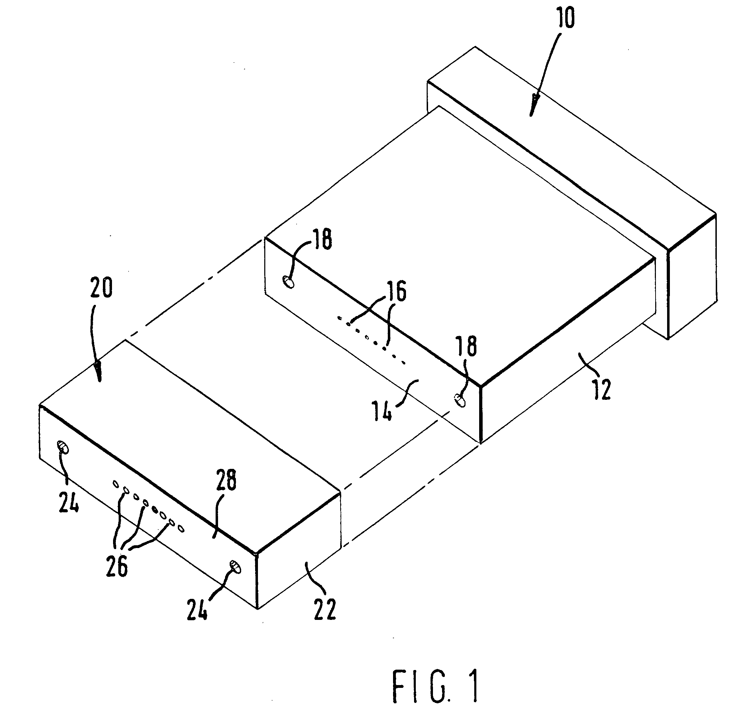

Referring initially to Figure 1, this illustrates the male part 10 of an MT (mechanically transferable) connector for connecting multiple single mode optical fibres in a communications network. The part 10 comprises a ferrule 12 in the form of a rectangular block ending in a connector interface 14. The block 12 contains a plurality of optical fibres 16 extending in parallel to one another longitudinally through the block and terminating at the interface 14. As shown, the respective ends of the optical fibres 16 emerging at the interface 14 are arranged in a row. The block 12 also contains a pair of holes 18 extending therethrough for receiving alignment pins (not shown). The illustrated ferrule is adapted to mate with a corresponding female part (not shown) for connecting the optical fibres 16 in the male part with a corresponding array of optical fibres in the female part, and alignment pins extend through the holes 18 in the male part and through corresponding openings in the female part for maintaining the rays of optical fibres in optical alignment in use.

The connector illustrated in Figure 1 further includes an additional part 20, namely an adaptor, for attachment to the male part 10, and of course in use there will be a corresponding non-illustrated adaptor for attachment to the equally non-illustrated female part.

The adaptor 20 comprises a second rectangular block 22 having the same dimensions in cross section as the rectangular block 12. The adaptor 20 also contains a pair of alignment holes 24, which correspond with the alignment holes 18, for receiving the same alignment pins. Typically, the holes have a diameter of 700 μm, are spaced 4.6 mm apart, and are positioned 0.9 mm in board of the adjacent edge of the block 22.

Extending through the adaptor 20, there are a plurality of parallel openings or bores 26, which are arranged to line up with the optical fibres 16 with a typical spacing of 250 μm. Thus, one end of each opening 26 is situated at a rear face of the adaptor block 22 opposed to a corresponding one of the optical fibres, and the other end of each opening 26 is situated at a secondary interface 28 provided at the front of the adaptor 20.

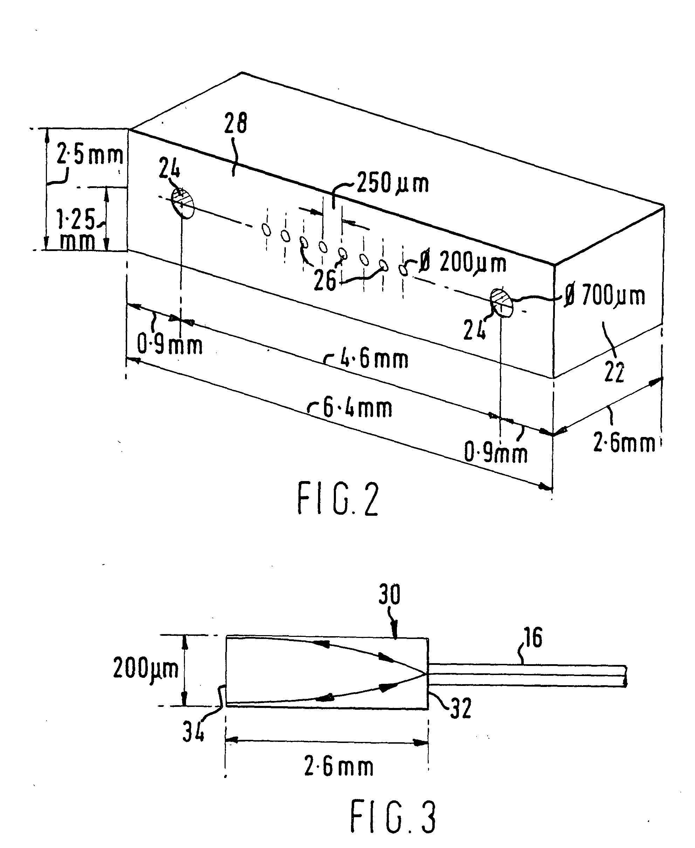

Each opening 26 contains a respective graded index lens 30 as shown in Figure 3. The function of the lens 30 is to receive the light beam emerging from the associated optical fibre 16 and to collimate the light beam, which is initially divergent. The collimated beam then has a greater diameter than the beam travelling in the fibre 16.

The relationship between each optical fibre and the associated lens is the same but the situation for only one such pair will be described for the sake of simplicity.

As illustrated, the lens has a first end 32 for receiving incident light from the optical fibre 16. The lens is cylindrical and has a variable refractive index, which varies in a direction outwardly along the radius of the lens. The incident light beam is divergent but becomes collimated as it travels along the lens towards a second end 34 of the lens from which an expanded collimated light beam emerges.

The length L of the lens and the diameter ø of the lens are determined as follows:

$$\text{Equation 1} \qquad L = \frac{\pi}{2\sqrt{A}}$$

$$\text{Equation 2} \qquad \phi = \frac{2\,NA_F}{n_{oo}\sqrt{A}}$$

where $\sqrt{A}$ is a quadratic constant signifying the variation in refractive index in the selected lens;

The $n_{oo}$ is the refractive index of the selected lens along the axis; and
$NA_f$ is the numerical aperture of the single mode optical fibre with which the lens is designed to be engaged.

Basically, the diameter of the lens is selected to be sufficient to accept all of the light in the incident light beam, given the divergence of this light beam as it exits from the optical fibre as signified by the numerical aperture of the optical fibre. The desired diameter of the collimated emergent light beam is determined by $n_{oo}$ and $\sqrt{A}$ and limited to an extent by $NA_f$. Beam focusing is achieved by appropriate selection of the length of the lens.

In a particular example, the lens parameters may be as follows:

$$\sqrt{A} = 0.597$$
$$n_{oo} = 1.592$$
$$L = 2.6 \text{ mm}$$
$$\phi = 200 \text{ μm}$$

Advantageously, a layer of index matching adhesive may be applied across the rear face of the adaptor for attaching the adaptor to the connector interface 14 in conjunction with the alignment pins and for minimizing back reflection between lens and fibre at the interface 14. Such adhesive also serves to isolate the interface from vibration and provides an environmental seal, which enhances the robustness and reliability of the connector.

The adaptor can be modified to accommodate different types of optical fibre, having different numerical apertures or designed for carrying different wavelengths of light, by appropriate alteration of the various lens parameters.

The description above has concentrated on the use of the adaptor with the male connector part 10 of an MT connector for receiving light emerging from the single mode optical fibres of this male part. Obviously, the adaptor can also be employed for supplying light to the optical fibres of the male part 10 of the connector. Likewise, it will be apparent that a similar adaptor is appropriate for transmitting light to or from the female part of the connector as well. In other words, two adaptors would be employed together, one in conjunction with the male part and one in conjunction with the female part of the MT connector.

The present adaptor is both economical and reliable and provides a compact rugged arrangement for use with multiple optical fibre connectors in a communications network, e.g. for aircraft.

**Claims**

1. A detachable adaptor (20) for use with a fibre optic connector of the kind having two connector parts (10), each carrying a plurality of optical fibres (16), for coupling beams of light between ends of the optical fibres in the respective parts of the fibre optic connector and for optically aligning the said beams of light, the adaptor being **characterised by** a body (22) having therethrough a plurality of parallel passages (26) each containing a respective graded index lens for expanding the beam of light from an associated optical fibre in the connector, the adaptor body (22) further being provided with a pair of holes (24) extending therethrough, each hole to receive an alignment pin for aligning the adaptor with and attaching the adaptor to the fibre optic connector.

2. An adaptor according to claim 1 **characterised in that** the passages (26) are arranged to terminate in a row at a face of the adaptor body (22) forming an adaptor/connector interface (14).

3. An adaptor according to claim 2 **characterised in that** a layer of adhesive is provided at the interface (14) and/or at an opposed face of the adaptor body (22) constituting a secondary interface (28).

4. An adaptor according to claim 3 **characterised in that** the layer of adhesive has a refractive index selected to match the refractive properties of the said optical means (30).

5. A fibre optic connection comprising:

   a pair of fibre optic connectors (10), each connector (10) having a connector body (12) ending in a connector interface (14) and a plurality of optical fibres (16) extending through the connector body (12) and terminating at the interface (14), each connector body (12) further being provided with a pair of alignment holes (18) extending therethrough;

   and a pair of alignment pins receivable within the alignment holes (18) of both connectors (10);

   and **characterised by**
   a pair of detachable adaptors (20), each comprising an adaptor body (22) having therethrough a plurality of parallel passages (26) each containing a respective graded index lens (30) and also having a pair of alignment holes (24) extending therethrough respectively for receiving the alignment pins for aligning the adaptor (20) with and detachably attaching the adaptor to a respective one of the fibre optic connectors (10) and to the other adaptor (20) whereby the adaptors (20) can be detachably attached to the fibre optic connectors (10) such that each optical fibre is accurately aligned with a respective graded index lens for coupling beams of light between optical fibres in said pair of fibre connectors (10).

6. A connection according to claim 5 **characterised in that** the passages (26) in each adaptor body (22) are arranged to terminate in a row at a face of the adaptor body (22) forming an adaptor/connector interface (14).

7. A connection according to claim 6 **characterised in that** a layer of adhesive is provided at the interface (14) and/or at an opposed face of each adaptor body (22) constituting a secondary interface (28).

**Patentansprüche**

1. Abnehmbarer Adapter (20) zur Benutzung in Verbindung mit einem faseroptischen Stecker (10), der eine Mehrzahl optischer Fasern (16) führt zur Kopplung der Lichtstrahlen von den optischen Fasern, wobei der Adapter optisch auf die Lichtstrahlen der optischen Faserenden ausgerichtet ist, die an verschiedenen Stellen im faseroptischen Stecker befindlich sind, wobei der Adapter durch einen Körper (22) gekennzeichnet ist, der eine Vielzahl paralleler Kanäle (26) aufweist, die jeweils eine entsprechende Gradientenindex-Linse aufweisen, um den Lichtstrahl einer zugeordneten optischen Faser im Stecker auszudehnen, wobei der Adapterkörper (22) weiter mit zwei durchgehenden Paßlöchern (24) ausgerüstet ist und jedes Paßloch einen Paßstift aufnimmt, um den Adapter auf den faseroptischen Stecker auszurichten und mit diesem zu verbinden.

2. Adapter nach Anspruch 1,
   **dadurch gekennzeichnet, daß** die Kanäle (26) in einer Reihe an der Stirnseite des Adapterkörpers (22) enden, die ein Adapter/Stecker-Interface (14) bildet.

3. Adapter nach Anspruch 2,
   **dadurch gekennzeichnet, daß** eine Kleberschicht auf der Interfacefläche (14) und/oder auf einer gegenüberliegenden Fläche des Adapterkörpers (22) angeordnet ist, die ein zweites Interface (28) bildet.

4. Adapter nach Anspruch 3,
   **dadurch gekennzeichnet, daß** die Kleberschicht einen Brechungsindex besitzt, der so gewählt ist, **daß** er an die Brechungseigenschaften der optischen Einrichtung (30) angepaßt ist.

5. Faseroptische Verbindung, welche folgende Teile umfaßt:

   zwei faseroptische Stecker (10), die einen Steckerkörper (12) aufweisen, der in einem Stecker-Interface (14) endet, wobei mehrere optische Fasern (16) sich durch den Steckerkörper (12) erstrecken und an einem Interface (14) enden, und wobei jeder Steckerkörper (12) außerdem mit zwei Paßlöchern (18) versehen ist, die durch diesen hindurchgeführt sind;

und zwei Paßstifte, die in den Paßlöchern (18) beider Stecker (10) angeordnet sind;

**gekennzeichnet durch**

zwei abnehmbare Adapter (20), die jeweils einen Adapterkörper (22) aufweisen, **durch** den mehrere parallele Kanäle (26) verlaufen, von denen jeder eine entsprechende Gradientenindex-Linse (30) aufweist und der Adapter zwei Paßlöcher (24) besitzt, die sich **durch** den Adapter hindurch erstrecken, um Paßstifte aufzunehmen und um den Adapter (20) auf einen entsprechenden faseroptischen Stecker aufzusetzen und gegenüber diesem und dem faseroptischer Stecker (10) so auszurichten, daß jede optische Faser genau auf eine jeweilige Gradientenindex-Linse ausgerichtet ist, um Lichtstrahlen zwischen den optischen Fasern von zwei faseroptischen Steckern (10) zu koppeln.

**6.** Verbindung nach Anspruch 5,
**dadurch gekennzeichnet, daß** die Kanäle (26) in jedem Adapterkörper (22) so angeordnet sind, **daß** sie in einer Reihe an der Stirnseite des Adapterkörpers (22) enden, die ein Adapter/Stecker-Interface (14) bildet.

**7.** Verbindung nach Anspruch 6,
**dadurch gekennzeichnet, daß** eine Kleberschicht auf dem Interface (14) und/oder auf einer gegenüberliegenden Stirnfläche eines jeden Adapterkörpers (22) vorgesehen ist, die ein Sekundär-Interface (28) bildet.

**8.** Verbindung nach Anspruch 7,
**dadurch gekennzeichnet, daß** die Kleberschicht einen Brechungsindex aufweist, der so gewählt ist, **daß** eine Anpassung an die Brechungseigenschaften der Gradientenindex-Linsen erfolgt.

**Revendications**

**1.** Adaptateur amovible (20) destiné à être utilisé avec un connecteur de fibres optiques (10) du type supportant une pluralité de fibres optiques (16), pour coupler les faisceaux de lumière provenant des fibres optiques, l'adaptateur étant aligné optiquement avec les faisceaux de lumière provenant des extrémités des fibres optiques qui se trouvent à différents emplacements dans le connecteur de fibres optiques, l'adaptateur étant **caractérisé par** un corps (22) comportant une pluralité de passages parallèles (26) à travers celui-ci, contenant chacun une lentille à gradient d'indice respective pour élargir le faisceau de lumière provenant d'une fibre optique associée dans le connecteur, le corps d'adaptateur (22) étant, de plus, pourvu de deux trous (24) s'étendant à travers celui-ci, chaque trou recevant une broche d'alignement pour aligner l'adaptateur avec le connecteur de fibres optiques et pour l'attacher à celui-ci.

**2.** Adaptateur selon la revendication 1, **caractérisé en ce que** les passages (26) sont agencés de manière à se terminer en une rangée au niveau d'une face du corps d'adaptateur (22) formant une interface adaptateur/connecteur (14).

**3.** Adaptateur selon la revendication 2, **caractérisé en ce qu'**une couche d'adhésif est prévue au niveau de l'interface (14) et/ou d'une face opposée du corps d'adaptateur (22) constituant une interface secondaire (28) .

**4.** Adaptateur selon la revendication 3, **caractérisé en ce que** la couche d'adhésif a un indice de réfraction sélectionné de manière à correspondre aux propriétés de réfraction desdits moyens optiques (30).

**5.** Connexion de fibres optiques comprenant :

deux connecteurs de fibres optiques (10), chaque connecteur (10) comportant un corps de connecteur (12) se terminant dans une interface de connecteur (14) et une pluralité de fibres optiques (16) s'étendant à travers le corps de connecteur (12) et se terminant au niveau de l'interface (14), chaque corps de connecteur (12) étant pourvu, de plus, de deux trous d'alignement (18) s'étendant à travers celui-ci ;
et deux broches d'alignement pouvant être reçues dans les trous d'alignement (18) des deux connecteurs (10) ;

et **caractérisée par** :
deux adaptateurs amovibles (20), comprenant chacun un corps d'adaptateur (22) comportant une pluralité de passages parallèles (26) à travers celui-ci, contenant chacun une lentille à gradient d'indice (30) respective et comportant également deux trous d'alignement (24) s'étendant à travers celui-ci respectivement pour recevoir les broches d'alignement pour aligner l'adaptateur (20) avec l'adaptateur et pour attacher de manière amovible l'adaptateur à un connecteur respectif parmi les connecteurs de fibres optiques (10) et à l'autre adaptateur (20), de telle manière que les adaptateurs (20) puissent être attachés de manière amovible aux connecteurs de fibres optiques (10), de sorte que chaque fibre optique soit alignée avec précision avec une lentille à gradient d'indice respective pour coupler les faisceaux de lumière entre les fibres optiques dans lesdits deux connecteurs de fibres optiques (10).

6. Connexion selon la revendication 5, **caractérisée en ce que** les passages (26) dans chaque corps d'adaptateur (22) sont agencés de manière à se terminer en une rangée au niveau d'une face du corps d'adaptateur (22) formant une interface adaptateur/connecteur (14).

7. Connexion selon la revendication 6, **caractérisée en ce qu'**une couche d'adhésif est prévue au niveau de l'interface (14) et/ou d'une face opposée de chaque corps d'adaptateur (22) constituant une interface secondaire (28).

8. Connexion selon la revendication 7, **caractérisée en ce que** la couche d'adhésif a un indice de réfraction sélectionné de manière à correspondre aux propriétés de réfraction des lentilles à gradient d'indice (30).

FIG. 1

FIG. 2

FIG. 3